# EUROPÄISCHE PATENTSCHRIFT

(11) **EP 2 740 203 B1**
(45) Veröffentlichungstag und Bekanntmachung des Hinweises auf die Patenterteilung: **14.12.2016**
(21) Anmeldenummer: 12747893.1
(22) Anmeldetag: 31.07.2012
(51) Int. Cl.: H02M 1/42, H02J 3/18, H02M 1/00

(54) **ELEKTRISCHE VERSORGUNGSVORRICHTUNG MIT LEISTUNGSFAKTORKORREKTUR UND ANPASSUNG DES STROMFORMSIGNAL SOWIE VERFAHREN ZUM BETRIEB**
ELECTRICAL POWER SUPPLY APPARATUS WITH PFC AND CURRENT FORMING SIGNAL AND A METHOD FOR OPERATING THE SAME
DISPOSITIF D'ALIMENTATION ÉLECTRIQUE AVEC CORRECTION DE FACTEUR DE PUISSANCE ET SIGNAL DE FORME DU COURANT ET PROCÉDÉ POUR L'OPÉRATION

(30) Priorität: 03.08.2011 DE 102011109333
(43) Veröffentlichungstag der Anmeldung: 11.06.2014
(73) Patentinhaber: Diehl Aerospace GmbH, 88662 Überlingen (DE)
(72) Erfinder: NIEBERLEIN, Uwe, 91154 Roth (DE); JORDAN, Jens, 90408 Nürnberg (DE); KÖNINGER, Günther, 90616 Neuhof (DE)
(74) Vertreter: Diehl Patentabteilung
(86) Internationale Anmeldenummer: PCT/EP2012/003235
(87) Internationale Veröffentlichungsnummer: WO 2013/017253

(56) Entgegenhaltungen:
- EP-A2- 0 784 372
- WO-A1-00/07414
- US-A1- 2006 158 912
- US-B1- 6 178 101
- SONGRONG WU ET AL: "Boost PFC converter with a new sinusoidal reference current algorithm", COMMUNICATIONS, CIRCUITS AND SYSTEMS, 2009. ICCCAS 2009. INTERNATIONAL CONFERENCE ON, IEEE, PISCATAWAY, NJ, USA, 23. Juli 2009 (2009-07-23), Seiten 711-715, XP031528823, DOI: 10.1109/ICCCAS.2009.5250414 ISBN: 978-1-4244-4886-9
- KONSTANTIN P LOUGANSKI ET AL: "Active Compensation of the Input Filter Capacitor Current in Single-Phase PFC Boost Converters", COMPUTERS IN POWER ELECTRONICS, 2006. COMPEL '06. IEEE WORKSHOPS ON, IEEE, PI, 1. Juli 2006 (2006-07-01), Seiten 282-288, XP031044947, ISBN: 978-0-7803-9724-8

## Beschreibung

Die Erfindung betrifft eine elektrische Versorgungsvorrichtung mit einem Eingang zum Anschluss der elektrischen Versorgungsvorrichtung an eine Netzversorgung, die eine Wechselspannung als Eingangsspannung zur Verfügung stellt, mit einem Ausgang zum Anschluss der elektrischen Versorgungsvorrichtung an einen Verbraucher, wobei der Ausgang eine Gleichspannung als Ausgangsspannung zur Verfügung stellt, mit einem Gleichrichter, welcher die Eingangsspannung in eine gleichgerichtete Eingangsspannung gleichrichtet, mit einem PFC-Modul, welches eine Glättungseinrichtung zur Glättung der gleichgerichteten Eingangsspannung und eine aktive Leistungsfaktorkorrektureinrichtung umfasst, wobei die Leistungsfaktorkorrektureinrichtung ausgebildet ist, in Abhängigkeit von einem zeitabhängigen Stromformsignal einen zeitabhängigen Versorgungsstrom für die Glättungseinrichtung derart zu formen, dass der zeitabhängige Eingangsstrom in das PFC-Modul an das Stromformsignal angeglichen ist, und mit einem Steuerungsmodul, welches das Stromformsignal für das PFC-Modul, insbesondere für die Leistungskorrektureinrichtung, erzeugt. Die Erfindung betrifft auch ein Verfahren zum Betrieb der elektrischen Versorgungseinrichtung.

Zur Versorgung von elektrischen Verbrauchern aus einem Versorgungsnetz werden üblicher Weise Netzteile verwendet, welche bei vielen Ausführungsformen aus einer Wechselspannung als Netzspannung aus dem Versorgungsnetz eine Gleichspannung für den Verbraucher erzeugen.

Allerdings treten bei sinusförmigen Netzspannungen des Versorgungsnetzes und nichtlinearen Verbrauchern phasenverschobene und nicht sinusförmige Netzströme auf, die in dem Versorgungsnetz Störungen verursachen können. In dieser Situation ist im Versorgungsnetz der Augenblickswert des Netzstroms nicht proportional zum Augenblickswert der Netzspannung. Während die sinusförmige Netzspannung als eingeprägte Größe sinusförmig bleibt, kann der Netzstrom des Versorgungsnetzes zeitlich verschoben oder in der Form verändert sein. Dies führt dazu, dass der sogenannte Leistungsfaktor, welcher das Verhältnis von Betrag der Wirkleistung P zu dem Betrag einer Scheinleistung S bezeichnet, von seinem Idealwert 1 abweicht.
Zur Verbesserung des Leistungsfaktors werden üblicher Weise Leistungsfaktorkorrekturmodule, englisch Power Factor Correction oder Power Factor Compensation, abgekürzt PFC, eingesetzt. Diese Leistungsfaktorkorrekturmodule haben die Aufgabe, die nicht lineare Stromaufnahme von Verbrauchern zu kompensieren und im Falle einer aktiven Leistungsfaktorkorrektur zugleich eine Kompensation der Blindleistung zu erreichen, indem der Netzstrom in der Phasenlage an die Phasenlage der Netzspannung angeglichen wird.

Die Druckschrift DE 10 2006 044 879 A1 beschreibt eine Stromversorgungsvorrichtung mit einer Regeleinheit, die dazu vorgesehen ist, einen Stromverlauf an einen Spannungsverlauf anzugleichen. Die Angleichung wird durch wenigstens eine Aktiveinheit mit mindestens einer zuschaltbaren Einheit erreicht.

Ein Boost PFC-Konverter mit synthetischem Stromformsignal und Minimierung der Nulldurchgangsverzerrungen ist aus Songrong Wu et al: "Boost PFC converter with a new sinusoidal reference current algorithm", International Conference onCommunications, Circuits and Systems, 2009, ICCCAS 2009, IEEE, Piscataway, NJ, USA, 23. Juli 2009, Seiten 711 - 715 bekannt.

Es ist die Aufgabe der vorliegenden Erfindung, eine elektrische Versorgungsvorrichtung bereit zu stellen, welche die Belastung des Versorgungsnetzes gering hält. Ein weiterer Gegenstand der Erfindung ist es, ein Verfahren zum Betrieb der elektrischen Versorgungsvorrichtung vorzuschlagen.
Diese Aufgaben werden durch eine elektrische Versorgungsvorrichtung mit den Merkmalen des Anspruches 1 sowie durch ein Verfahren mit den Merkmalen des Anspruches 11 gelöst. Bevorzugte oder vorteilhafte Ausführungsformen der Erfindung ergeben sich aus den Unteransprüchen, der nachfolgenden Beschreibung sowie den beigefügten Figuren.
Die Erfindung betrifft somit eine elektrische Versorgungsvorrichtung, welche insbesondere als ein Netzteil ausgebildet ist. Das Netzteil kann z. B. zum Betrieb in einem Flugzeug zur Versorgung von Beleuchtungseinrichtungen, wie zum Beispiel Kabinenbeleuchtungen, ausgebildet sein. In dieser beispielhaften Ausgestaltung weist die elektrische Versorgungsvorrichtung eine Ausgangsleistung von größer 5 Watt, vorzugsweise größer 10 Watt und insbesondere größer 15 Watt und/oder kleiner als 500 Watt, vorzugsweise kleiner als 300 Watt und insbesondere kleiner als 200 Watt auf.

Die elektrische Versorgungsvorrichtung weist einen Eingang zum Anschluss der elektrischen Versorgungsvorrichtung an eine Netzversorgung auf. Bei einem Netzteil für ein Flugzeug kann die Netzversorgung beispielsweise eine Effektivspannung von 115 Volt und eine Netzfrequenz von 400 Hertz bis 800 Hertz aufweisen. Im Allgemeinen stellt die Netzversorgung eine Wechselspannung als Eingangsspannung Uin zur Verfügung.

Die elektrische Versorgungsvorrichtung umfasst einen Ausgang zum Anschluss der elektrischen Versorgungsvorrichtung an einen Verbraucher, wobei der Ausgang eine Gleichspannung als Ausgangsspannung Uout zur Verfügung stellt. In dem Beispiel als Netzteil für ein Flugzeug kann der Verbraucher als eine oder mehrere Beleuchtungseinrichtungen, insbesondere LED-Einrichtungen, ausgebildet sein. Die Ausgangsspannung Uout beispielsweise zwischen 200 Volt und 250 Volt liegen.

Die elektrische Versorgungsvorrichtung weist einen Gleichrichter auf, welcher die Eingangsspannung Uin in eine gleichgerichtete Eingangsspannung Upfc gleichrichtet. Derartige Gleichrichter sind hinreichend bekannt, insbesondere kann es sich bei dem Gleichrichter um einen Brückengleichrichter handeln.

Ferner ist ein vorzugsweise einphasiges PFC-Modul vorgesehen, welches zum einen eine Glättungseinrichtung zur Glättung der gleichgerichteten Eingangsspannung Upfc und zum anderen eine aktive Leistungsfaktorkorrektureinrichtung umfasst.

Die Glättungseinrichtung kann beispielsweise als ein Speicherkondensator ausgebildet sein, an dem die Ausgangsspannung Uout abgegriffen werden kann.

Die Leistungsfaktorkorrektureinrichtung ist ausgebildet, in Abhängigkeit von einem zeitabhängigen Stromformsignal einen zeitabhängigen Versorgungsstrom für die Glättungseinrichtung derart zu formen, dass ein zeitabhängiger Eingangsstrom Ipfc in das PFC-Modul an das Stromformsignal angeglichen ist. Oftmals wird der Versorgungsstrom für die Glättungseinrichtung einen gezackten, gestuften oder anders deformierten Verlauf aufweisen. Dagegen weist der zeitabhängige Eingangsstrom Ipfc einen Kurvenverlauf auf, der an den Kurvenverlauf des Stromformsignals angeglichen ist. Durch die Leistungsfaktorkorrektureinrichtung wird somit im Ergebnis der zeitabhängige Eingangsstrom Ipfc an die zeitabhängige Eingangsspannung Uin bzw. gleichgerichtete Eingangsspannung Upfc angeglichen.

Die elektrische Versorgungsvorrichtung umfasst ferner ein Steuerungsmodul, welches das Stromformsignal für das PFC-Modul, insbesondere für die Leistungsfaktorkorrektureinrichtung, erzeugt.

Das Steuerungsmodul generiert die Kurvenform des Stromformsignals im Betrieb der elektrischen Versorgungsvorrichtung unabhängig von der Eingangsspannung Uin oder der gleichgerichteten Eingangsspannung Upfc und synchronisiert das Stromformsignal zeitlich mit der Eingangsspannung Uin oder einer Ableitung der Eingangsspannung, insbesondere der gleichgerichteten Eingangsspannung Upfc. Anders ausgedrückt, wird im Betrieb der elektrischen Versorgungsvorrichtung die Kurvenform des Stromformsignals künstlich und zwar unabhängig von realen Spannungsverläufen erzeugt.

Der Vorteil ist darin zu sehen, dass durch die künstliche Erzeugung des Stromformsignals dieses keine Augenblicksreaktion von Augenblickswerten der Spannungsverläufe darstellt, sondern künstlich so gestaltet werden kann, dass die Betriebseigenschaften des Netzteils verbessert werden können. So wurde beispielsweise festgestellt, dass bei üblichen Netzteilen mit Leistungsfaktorkorrekturen gerade der hintere Teil einer Halbwelle des zeitabhängigen Eingangsstroms stark deformiert wird. Diese Deformation der fallenden Flanke der Halbwelle des Eingangsstroms führt zwangsläufig zu einer Deformation des gesamten Kurvenverlaufs und dadurch unter anderem zu einer Senkung des Leistungsfaktors.

Durch die künstlich gestaltete Kurvenform wird sichergestellt, dass das Stromformsignal so ausgebildet werden kann, dass der Leistungsfaktor konstant hoch und der Kurvenverlauf des Eingangsstroms mit wenigen Oberschwingungen realisiert werden kann. Weitere Vorteile ergeben sich daraus, dass in Sonderbetriebszuständen die Kurvenform ebenfalls unabhängig von den real anliegenden Augenblickswerten der Spannung gestaltet werden kann.

Um eine Angleichung des Eingangsstroms Ipfc mit der Eingangsspannung Uin bzw. der gleichgerichteten Eingangsspannung Upfc herstellen zu können, wird das Stromformsignal mit einem dieser Spannungen synchronisiert und gegebenenfalls in der zeitlichen Länge angepasst. Auf diese Weise ist es möglich, bei einer Änderung der Frequenz der Eingangsspannung Uin das Stromformsignal entsprechend zu strecken oder zu stauchen und dadurch die Synchronisation zu erreichen. Als Synchronisationszeitpunkt werden bevorzugt die Null-Durchgänge der Spannungskurven verwendet, bei abgewandelten Ausführungsformen können jedoch auch andere Synchronisationspunkte eingesetzt werden.
Bei einer bevorzugten Ausführungsform der Erfindung ist das Stromformsignal in Halbwellen unterteilt, wobei das Stromformsignal jeder Halbwelle durch eine Stromformmusterhalbwelle und einem Streckungsfaktor gebildet ist. Während die Stromformmusterhalbwelle durch die Synchronisation in zeitlicher Richtung gestreckt bzw. gestaucht wird, dient der Streckungsfaktor dazu, die Amplitude des Stromformsignals anzupassen. In einer sehr einfachen Ausführungsform der Erfindung ist deshalb vorgesehen, dass das Stromformsignal jeder Halbwelle durch eine Multiplikation des Streckungsfaktors mit der Stromformmusterhalbwelle gebildet wird. Bei abgewandelten Ausführungsformen kann statt einer Halbwelle als Stromformmuster auch eine Vollwelle oder ein Mehrfaches der Halbwelle verwendet werden. In dieser Ausgestaltung ist das Stromformsignal sehr einfach zu berechnen.

Bei einer bevorzugten Ausführungsform der Erfindung ist die Stromformmusterhalbwelle im Betrieb der elektrischen Versorgungsvorrichtung für jede Halbwelle gleich oder zumindest für mehr als 70 %, vorzugsweise mehr als 80 % des zeitlichen Verlaufs gleich ausgebildet. Insbesondere, und wie später noch erläutert wird, kann in den Anfangs- und Endbereichen der Stromformmusterhalbwelle Veränderungen vorgesehen sein. In einer sehr allgemeinen Ausführungsform ist die Stromformmusterhalbwelle konstant, bei abgewandelten Ausführungsformen ist die Stromformmusterhalbwelle nur quasi konstant, das heißt, sie kann sich im Betrieb aufgrund von geänderten Betriebsparametern etc. ändern. Die Stromformmusterhalbwelle ist beispielsweise für mindestens 50 aufeinander folgende, vorzugsweise 100 aufeinander folgende Halbwellen des Stromformsignal gleich. Es ist auch möglich, dass mehrere Stromformmusterhalbwellen zur Verfügung stehen, die wechselweise oder in Abhängigkeit von Anforderungen zur Anwendung kommen.

Die Kurvenform der Stromformmusterhalbwelle ist vorzugsweise berechnet oder abgelegt. Insbesondere kann die Stromformmusterhalbwelle in einer Look-Up-Tabelle oder als Datensatz abgelegt sein. Alternativ kann die Stromformmusterwelle z.B. durch eine einfache Funktion berechnet werden.

Bei einer Weiterbildung der Erfindung ist vorgesehen, dass das Steuerungsmodul eine Kontrolleinrichtung aufweist, die in Abhängigkeit der Differenz der Ausgangsspannung Uout und einer vorgebbaren Referenzspannung Uref einen Differenzparameter bereitstellt. Die Referenzspannung ist die Soll-Spannung der Ausgangsspannung. Werden beispielsweise mehrere Verbraucher an der elektrischen Versorgungsvorrichtung gleichzeitig angeschaltet, so kann die Ausgangsspannung Uout absinken und von der Soll-Ausgangsspannung abweichen. Diese Differenz zwischen Ausgangsspannung Uout und Referenzspannung Uref wird als Differenzparameter bereit gestellt und der Streckungsfaktor wird in Abhängigkeit des Differenzparameters gebildet. Praktisch betrachtet wird bei der Zuschaltung von mehreren Verbrauchern die Ausgangsspannung Uout sinken, so dass der Versorgungsstrom erhöht werden muss. Dies erfolgt durch eine Erhöhung des Streckungsfaktors für das Stromformsignal. Die Art der Nachführung der Ausgangsspannung zur Soll-Ausgangsspannung kann in der allgemeinsten Ausführungsform der Erfindung über beliebige Regler, z.B. PI oder PID-Regler, erfolgen.
Wie bereits eingangs erläutert, kann jedoch die hochdynamische Nachführung des Versorgungsstroms innerhalb einer Halbwelle zu einer Deformation der Kurvenform des Eingangsstroms Ipfc und damit zu einer Verschlechterung des Leistungsfaktors führen. Obwohl dieser Effekt bereits durch die Verwendung der Stromformmusterhalbwelle abgeschwächt ist, ist es bevorzugt, dass der Streckungsfaktor über eine Halbwelle konstant gehalten ist. Mit dieser Maßnahme wird sichergestellt, dass die Kurvenform der Stromformwelle der gegebenenfalls gestreckten oder gestauchten Kurvenform der Stromformmusterhalbwelle entspricht und dadurch an die Kurvenform der Eingangsspannung Uin oder gleichgerichteten Eingangsspannung Upfc angepasst ist, so dass ein hoher Leistungsfaktor von nahezu 1 erreicht werden kann. Technisch realisiert werden kann die Konstanthaltung des Streckungsfaktors über eine Halbwelle, zum Beispiel durch ein sogenanntes Sample-and Hold-Glied.
Gemäß der Erfindung weist das Steuermodul eine Phasenschiebereinrichtung auf, welche eine Phasenverschiebung des Stromformsignals und damit des Eingangsstroms Ipfc relativ zu der Eingangsspannung Uin bzw. der gleichgerichteten Eingangsspannung Upfc ermöglicht. Durch die Steuerung der Phasenlage zwischen Eingangsstrom Ipfc und Eingangsspannung Uin bzw. gleichgerichteter Eingangsspannung Upfc werden weitere Möglichkeiten der Anpassung der elektrischen Versorgungsvorrichtung eröffnet.

Die Phasenverschiebung ist so eingestellt, dass Blindströme in der elektrischen Versorgungsvorrichtung, hervorgerufen durch Blindstromerzeuger, korrigiert oder kompensiert werden. Blindströme werden insbesondere durch kapazitive oder induktive Lasten hervorgerufen und führen zu einer Verschlechterung des Leistungsfaktors. Insbesondere werden durch diese Maßnahmen Leistungsfaktoren größer als 0,98, im Speziellen größer als 0,99 erreicht.
Bei einer möglichen Ausgestaltung der Erfindung weist die elektrische Versorgungsvorrichtung einen HF-Filter mit kapazitiver Wirkung auf, welcher zu einer kapazitiven Verschiebung des Eingangsstroms relativ zu der Eingangsspannung führt. Derartige HF-Filter weisen oftmals eine Kapazität auf, um höhere Frequenzen zu dämpfen. Um die Wirkung der durch die Kapazität hervorgerufenen Blindströme zu korrigieren oder zu kompensieren, wird der Eingangsstrom Ipfc durch die Phasenschiebereinrichtung zeitlich betrachtet in Gegenrichtung verschoben. Durch diese Maßnahme können sogar Effekte, die durch den vorgeschalteten HF-Filter erzeugt werden, erfolgreich kompensiert werden.

Bei einer möglichen Ausführungsform der Erfindung ist die Phasenverschiebung im Betrieb als konstanter oder quasi konstanter Parameter ausgebildet. Nachdem bei dem Entwurf und der Konzeption der elektrischen Versorgungsvorrichtung die Komponenten in der elektrischen Versorgungsvorrichtung bekannt sind, kann ein Blindstrom des Blindstromerzeugers, insbesondere des vorgeschalteten HF-Filters, zuvor abgeschätzt, berechnet oder vermessen werden und die daraus resultierende notwendige oder sinnvolle Phasenverschiebung für den Eingangsstrom als konstanter oder quasi konstanter Parameter eingestellt werden. Diese Ausführungsform zeichnet sich durch eine hohe Robustheit und eine einfache Konfiguration aus.

Bei einer anderen Ausführungsform der Erfindung ist die Phasenverschiebung als variabler, insbesondere lastabhängiger Parameter ausgestaltet. In dieser Ausgestaltung wird berücksichtigt, dass in Abhängigkeit der Last der anliegenden Verbraucher der Einfluss der Blindströme unterschiedlich stark ist und somit für eine optimale Kompensation oder Korrektur lastabhängig unterschiedliche Phasenverschiebungen notwendig sind. So fällt zum Beispiel bei einer Volllast der Blindstrom wenig ins Gewicht, so dass die kompensierende Phasenverschiebung relativ gering ausfallen kann. Dagegen wirkt sich der Blindstrom bei einer Teillast deutlich stärker aus, so dass auch die Phasenverschiebung zur Kompensation des Blindstroms stärker ausfallen muss.

Gemäß der Erfindung wird die Stromformmusterhalbwelle in mindestens einem Randbereich für mindestens die Zeitdauer, die der Phasenverschiebung entspricht, auf Null gesetzt. Der Erfindung liegt die Überlegung zugrunde, dass aufgrund der Phasenverschiebung zwischen Eingangsstrom für das PFC-Modul und Eingangsspannung bzw. gleichgerichteter Eingangsspannung es bei Null-Durchgängen der Eingangsspannung zu unerwünschten Stromspitzen beim Netzstrom kommen kann.

Gemäß der Erfindung, wobei der eine gleichgerichtete Eingangsspannungshalbwelle und eine Halbwelle des Eingangsstroms um eine Phasenverschiebung zueinander verschoben sind, wird die Stromformmusterhalbwelle in dem Randbereich auf Null gesetzt, so dass der Eingangsstrom Ipfc in dem Zeitbereich zwischen dem Nulldurchgang der gleichgerichteten Eingangsspannungshalbwelle und dem unmodifizierten Stromformsignal auf Null gesetzt ist. Durch diese Maßnahme werden Stromspitzen im Netzstrom zeitlich korrespondierend zu dem auf Null gesetzten Bereich der Stromformmusterhalbwelle, des Stromformsignals bzw. des Eingangsstroms weitgehend unterdrückt.

Obwohl derartige Stromspitzen den Leistungsfaktor nur gering oder nicht beeinflussen, ist die Unterdrückung der Stromspitzen dennoch sinnvoll, da durch diese Maßnahme die Kurvenform des Netzstroms deutlich verbessert wird, was ebenfalls ein Qualitätsfaktor für eine elektrische Versorgungsvorrichtung ist.

Ein weiterer Gegenstand betrifft ein Verfahren zum Betrieb der elektrischen Versorgungseinrichtung wie diese zuvor beschrieben wurde bzw. nach einem der vorhergehenden Ansprüche. Vorzugsweise umfasst das Verfahren eine Umkonfiguration der elektrischen Versorgungseinrichtung, wobei die Stromformmusterhalbwelle, der Streckungsparameter und/oder die Referenzspannung softwaretechnisch geändert wird bzw. werden.

Weitere Merkmale, Vorteile und Wirkungen der Erfindung ergeben sich aus der nachfolgenden Beschreibung eines bevorzugten Ausführungsbeispiels der Erfindung sowie der beigefügten Figuren. Dabei zeigen:
- Figur 1: eine schematische Blockdarstellung eines Netzteils als ein Ausführungsbeispiel der Erfindung;
- Figuren 2 a bis e: verschiedene Graphen von Kurvenformen;
- Figur 3: Strom- und Spannungssignale des Netzteils in der Figur 1;
- Figur 4: die gleichen Strom- und Spannungssignale wie in der Figur 3, jedoch bei einer Phasenverschiebung;
- Figur 5: in gleicher Darstellung wie Figur 4, jedoch mit einer Nullpunkt-Nullung.

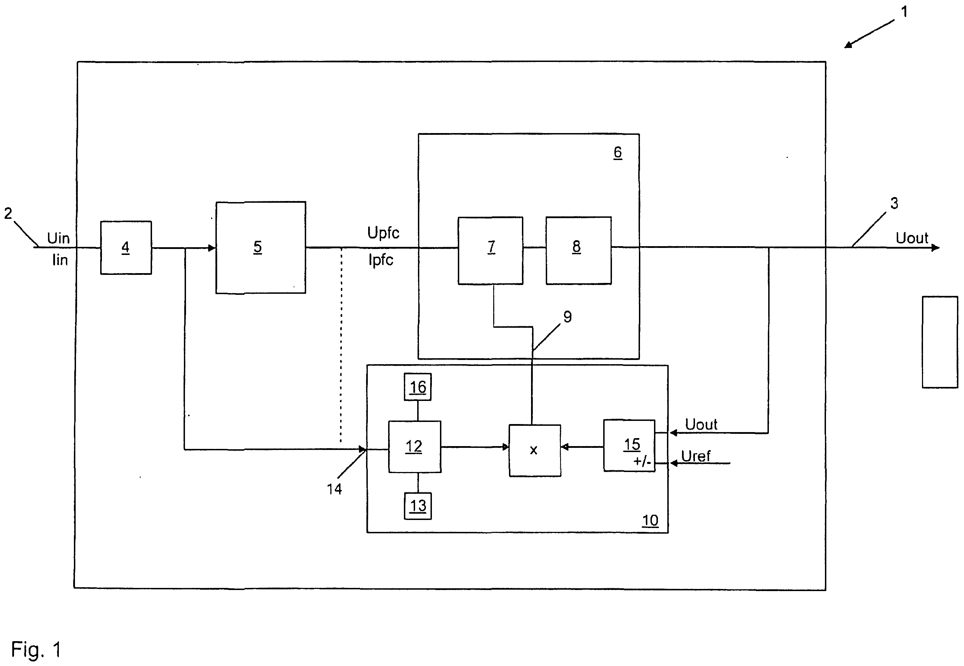

Die Figur 1 zeigt in einer schematischen Blockdarstellung ein Netzteil 1, zum Beispiel für eine Beleuchtung eines Flugzeuges, als ein Ausführungsbeispiel der Erfindung, welches eine elektrische Versorgungsvorrichtung bildet. Das Netzteil 1 hat eine Leistung zwischen 20 Watt und 200 Watt und dient im Flugzeug zur Versorgung von nicht dargestellten Beleuchtungseinrichtungen, insbesondere LED-Beleuchtungseinrichtungen, zur Flugzeuginnenraumbeleuchtung.

Das Netzteil 1 weist einen Eingang 2 auf, mit dem das Netzteil 1 an das Versorgungsnetz des Flugzeugs angeschlossen werden kann. Das Versorgungsnetz stellt eine Eingangsspannung sowie einen Netzstrom zur Verfügung. Die Eingangsspannung ist als eine sinusförmige Wechselspannung ausgebildet und hat eine Frequenz zwischen 400 Hertz und 800 Hertz und eine effektive Eingangsspannung von 115 V.

Das Netzteil 1 weist einen Ausgang 3 auf, welcher mit den Verbrauchern, insbesondere den Beleuchtungseinrichtungen in dem Flugzeug, verbindbar oder verbunden ist. Die Ausgangsspannung ist eine Gleichspannung, welche beispielsweise zwischen 200 Volt und 250 Volt beträgt.

Ausgehend von dem Eingang 2 ist nachfolgend ein HF-Filter 4 angeordnet, welcher zur Filterung von hohen Frequenzen ausgebildet ist. In einer konkreten Ausgestaltung kann der HF-Filter 4 mindestens einen Kondensator aufweisen. Insbesondere ist der HF-Filter 4 als ein Netzfilter ausgebildet.

Nach dem HF-Filter 4 ist ein Gleichrichter 5 angeordnet, welcher die Eingangsspannung in eine gleichgerichtete Eingangsspannung wandelt. Beispielsweise ist der Gleichrichter 5 als ein Brückengleichrichter oder Vollweggleichrichter ausgebildet. Die gleichgerichtete Eingangsspannung ist eine pulsierende Gleichspannung, wobei - grafisch betrachtet - Anteile der Eingangsspannung, die im negativen Spannungsbereich verlaufen, um die X-Achse gespielt sind. Die pulsierende, gleichgerichtete Eingangsspannung hat damit die doppelte Frequenz der Eingangsspannung. Der in diesem Bereich fließende Strom wird als Eingangsstrom bezeichnet.

Die gleichgerichtete Eingangsspannung wird nachfolgend in ein PFC-Modul 6 geleitet, welches eine Leistungsfaktorkorrektureinrichtung 7 und eine Glättungseinrichtung 8 aufweist.

Die Glättungseinrichtung 8 dient dazu, die pulsierende gleichgerichtete Eingangsspannung in die Ausgangsspannung mit konstanter Spannungshöhe zu wandeln. Die Glättungseinrichtung 8 kann im Rahmen eines Ersatzschaltbildes als ein Kondenstor dargestellt werden.

Die Leistungsfaktorkorrektureinrichtung 7 dient dazu, den Eingansstrom in das PFC-Modul 6 an die gleichgerichtete Eingangsspannung anzugleichen. Die Angleichung erfolgt dabei, um dem Leistungsfaktor im Bereich der Netzversorgung, also im Bereich des Eingangs 2, zu verbessern. Die Leistungsfaktorkorrektureinrichtung 7 ermöglicht dies, indem der Versorgungsstrom, der der Glättungseinrichtung 8 zugeführt wird, so moduliert wird, dass der Eingangsstrom in das PFC-Modul 6 einem vorgegebenen Stromformsignal 9 angeglichen wird. Das Stromformsignal 9 wird in einem Steuerungsmodul 10 erzeugt wie nachfolgend darlegt wird.

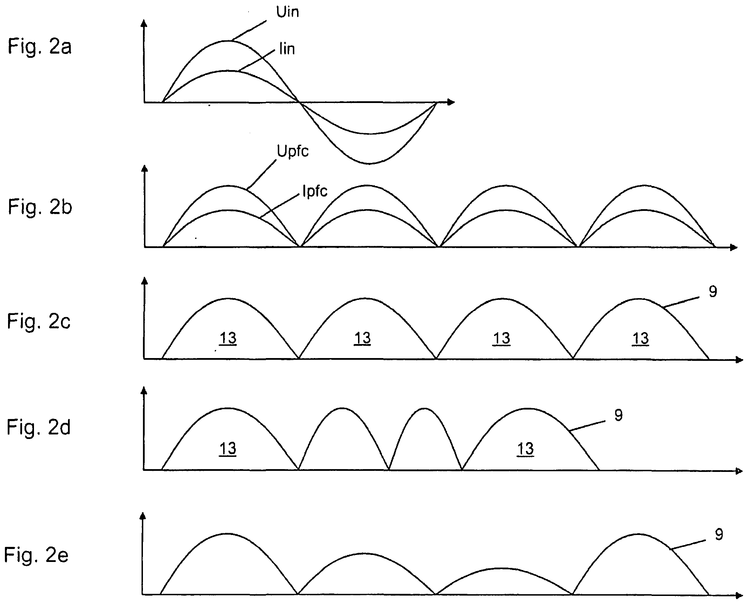

Die Figur 2 a zeigt jeweils eine Vollwelle des Netzstroms lin und der Eingangsspannung Uin in das Netzteil 1. Beide Kurven sind sinusförmig und weisen eine Phasenlage zueinander von 0 Grad auf, das heißt, sie sind gleichphasig. Dieser Zustand stellt hinsichtlich des Leistungsfaktors das Optimum dar, so dass hier ein Leistungsfaktor von 1 vorliegt.

Um diesen Idealzustand zu erreichen, muss in dem Bereich hinter dem Gleichrichter 5 und vor dem PFC-Modul 6 die gleichgerichtete Eingangsspannung Upfc und der Eingangsstrom Ipfc in das PFC-Modul 6 ebenfalls eine feste Phasenlage zueinander aufweisen. In der Figur 2 b ist die gleichgerichtete Eingangsspannung Upfc sowie der Eingangsstrom Ipfc dargestellt, wobei hier jedoch eine Phasenlage von 0 Grad, also wieder ein gleichphasiges Verhalten dargestellt ist.

Um den Eingangsstrom Ipfc, wie dieser beispielhaft in der Figur 2 b gezeigt, zu erhalten, muss das Stromformsignal 9 somit ebenfalls aus einer Vielzahl von Sinushalbwellen zusammengesetzt sein. Der Kurvenverlauf eines beispielhaften Stromformsignals 9 ist in der Figur 2 c dargestellt.

Um das Stromformsignal 9 zu erzeugen, weist das Steuerungsmodul 10 einen Signalgenerator 12 auf, welcher das Stromformsignal 9 auf Basis einer hinterlegten oder berechneten Stromformmusterhalbwelle 13 erzeugt. In der Figur 2 c sind hintereinander vier Wiederholungen der Stromformmusterhalbwelle 13 gezeigt.

Mit dem Ziel, die Phasenlage zwischen der Eingangsspannung Uin bzw. der gleichgerichteten Eingangsspannung Upfc und dem Stromformsignal 9 und damit dem Eingangsstrom Ipfc zu erreichen, weist das Steuerungsmodul 10 einen Synchronisationseingang 14 (Figur 1) auf, in den ein Synchronisationssignal der Eingangsspannung Uin oder der gleichgerichteten Eingangsspannung Upfc hereingeführt wird. Nachdem es in Versorgungsnetzen durchaus auch zu Schwankungen hinsichtlich der Frequenz kommen kann, ist das Steuerungsmodul 10 so ausgelegt, dass es die Strommusterhalbwelle 13 in zeitlicher Richtung strecken bzw. stauchen kann. Diese Situation ist schematisch in der Figur 2 d dargestellt, wobei die erste Halbwelle der ungeänderten Strommusterhalbwelle 13 entspricht, die nachfolgenden zwei Halbwellen jedoch in zeitlicher Richtung gestaucht sind.

Ferner umfasst das Steuerungsmodul 10 eine Kontrolleinrichtung 15 (Figur 1), welche die Ausgangsspannung Uout mit einer Referenzspannung Uref vergleicht, um den Stromfluss in die Glättungseinrichtung 8 regeln zu können. Werden beispielsweise viele Verbraucher an den Ausgang 3 angeschlossen oder aktiviert, so wird die Ausgangsspannung Uout fallen und muss durch einen erhöhten Versorgungsstrom in die Glättungseinrichtung 8 kompensiert werden. Die Kontrolleinrichtung 15 vergleicht die Ausgangsspannung Uout mit der Referenzspannung Uref und bildet einen Differenzparameter. Aus dem Differenzparameter wird ein Streckungsfaktor abgeleitet und mit der Strommusterhalbwelle 13 multipliziert. Der Streckungsfaktor kann in Abhängigkeit der Normierung beispielsweise zwischen 0 und 1 liegen.

Die Wirkung des Streckungsfaktors ist in der Figur 2 e dargestellt, wobei die erste Halbwelle einen Streckungsfaktor von 1, die zweite Halbwelle einen Streckungsfaktor von 0,7, die dritte Halbwelle einen Streckungsfaktor von 0,3 und die vierte Halbwelle einen Streckungsfaktor von 1 aufweist.

Im Betrieb wird das Stromformsignal 9 sowohl durch die Anpassung der Stromformmusterhalbwelle 13 durch die zeitliche Synchronisation als auch durch den Streckungsfaktor geformt.

Hervorzuheben ist, dass die Kurvenform des Stromformsignals 9 unabhängig von der aktuellen Kurvenform der Eingangsspannung Uin oder der gleichgerichteten Eingangsspannung Upfc ist. So kann es durchaus sein, dass die Eingangsspannung Uin oder die gleichgerichtete Eingangsspannung Upfc deformiert ist, dies hat jedoch keinen Einfluss auf die Kurvenform des Stromformsignals 9, da diese durch die Stromformmusterhalbwelle 13 gebildet wird.

Bei herkömmlichen Leistungsfaktorkorrekturen steht stets die Frage nach der Dynamik der Nachführung der Ausgangsspannung im Raum. Wird die Dynamik sehr hoch gewählt, kann die Leistungsfaktorkorrektur sehr schnell auf Lastsprünge der Verbraucher reagieren. Diese hohe Dynamik hat jedoch den Nachteil, dass bei der fallenden Flanke des Eingangsstroms Ipfc die Ausgangsspannung Uout ebenfalls etwas absinkt, so dass systembedingt ein schneller Regler versuchen wird, den Versorgungsstrom und damit den Eingangsstrom Ipfc im zeitlichen Bereich der nächsten steigenden Flanke der Halbwelle zu erhöhen. Dies führt jedoch bei herkömmlichen Systemen unweigerlich dazu, dass die Kurvenform des Eingangsstrom Ipfc und damit die Kurvenform des Netzstrom lin von einem Sinus abweicht und verzerrt bzw. deformiert ist.

Dem gegenüber wird bei dem Netzteil 1 der Streckungsfaktor über die Zeitdauer einer Halbwelle konstant gehalten. Änderungen aufgrund des Differenzparameters werden somit erst zu Beginn einer neuen Halbwelle berücksichtigt. Dieses Vorgehen hat den Vorteil, dass die Dynamik des Netzteils 1 sehr hoch ist, da der Streckungsparameter sprunghaft von einer Halbwelle zur nächsten Halbwelle geändert werden kann, jedoch die Kurvenform durch diese hohe Dynamik nicht negativ beeinflusst wird, da durch den konstanten Streckungsfaktor die Strommusterhalbwelle 13 nicht verzerrt wird.

Das Steuerungsmodul 10 weist ferner eine Phasenschiebereinrichtung 16 auf, welche eine Phasenverschiebung des Stromformsignals 9 relativ zu der Eingangsspannung Uin ermöglicht. Durch die Phasenschiebereinrichtung 16 ist es somit möglich, die Phasenlage zwischen der gleichgerichteten Eingangsspannung Upfc oder der Eingangsspannung Uin einerseits und dem Eingangsstrom Ipfc und damit auch der Phasenlage zwischen der Eingangsspannung Uin und dem Netzstrom Uin zu verändern bzw. einzustellen.

Eine Phasenverschiebung zwischen Eingangsstrom Ipfc und gleichgerichteter Eingangsspannung Upfc kann beispielsweise dazu genutzt werden, eine durch eine Kapazität in dem HF-Filter 4 hervorgerufene kapazitive Phasenverschiebung zwischen Eingangsspannung Uin und Netzstrom lin zu korrigieren bzw. zu kompensieren. Durch die üblicher Weise vorhandene Kapazität in dem Hf-Filter 4 entsteht ein sogenannter Blindstrom, welcher in der Phasenlage um 90 Grad zu dem Wirkstrom des Netzstroms lin verschoben ist. Dieser Blindstrom führt zu einer Senkung des Leistungsfaktors. Durch die Phasenschiebereinrichtung 16 ist es nun möglich, den Eingangsstrom lin hinsichtlich der Phasenlage so zu verschieben, dass die Effekte des Blindstroms auf dem Leistungsfaktor möglichst gering sind. Statt des Blindstroms, der durch die Kapazität in dem HF-Filter 4 hervorgerufen wird, kann in gleicher Weise jeder andere Blindstrom, welcher durch eine Kapazität oder eine Induktivität in dem Netzteil hervorgerufen wird, kompensiert oder korrigiert werden.

Die Phasenschiebereinrichtung 16 kann in einer einfachen Ausführungsform des Netzteils 1 eine konstante Phasenverschiebung umsetzen, da bereits bei der Inbetriebnahme des Netzteils 1 die Größe der Kapazität in dem HF-Filter 4 bzw. anderer Blindstromerzeuger bekannt ist und für einen bestimmten Lastzustand des Netzteils 1 ein optimaler Wert zur Kompensation für die Phasenverschiebung gefunden werden kann. Ein weiteres Verbesserungspotential kann erschlossen werden, wenn die Phasenverschiebung lastabhängig durchgeführt wird, da bei einer niedrigeren Last der Blindstrom in dem gesamten Netzstrom lin anteilig größer ist als bei Volllast. Dementsprechend muss bei einer Teillast eine stärkere Phasenverschiebung zur Kompensation oder Korrektur umgesetzt werden als bei der Volllast.

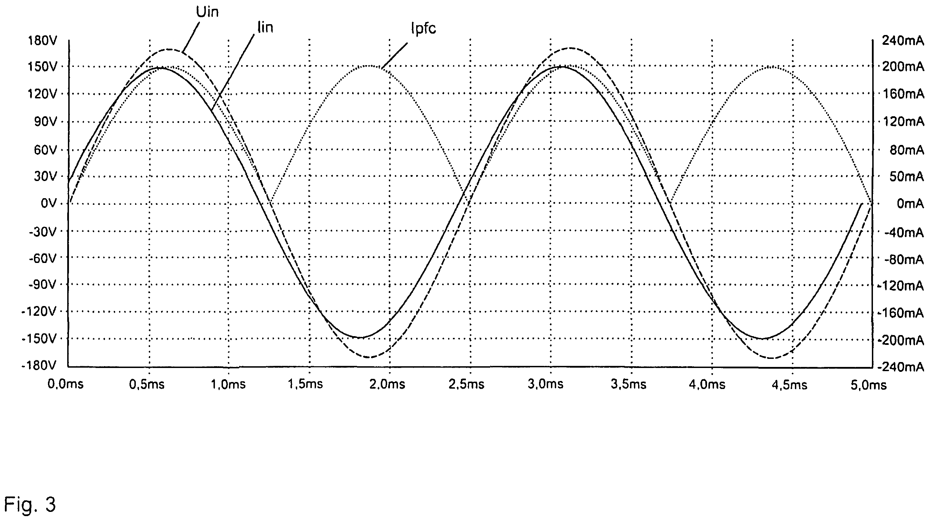

Die Figur 3 zeigt eine schematische Darstellung des Kurvenverlaufs der Eingangsspannung Uin, des Netzstroms lin und des Eingangsstroms Ipfc. In dieser Darstellung sind Eingangsspannung Uin und Eingangstrom Ipfc in gleicher Phase, das heißt, die Phasenverschiebung ist gleich 0. Aufgrund der kapazitiven Wirkung des HF-Filters 4 ist jedoch die Phasenlage des Netzstroms lin leicht in negativer Zeitrichtung verschoben. Nachdem der Leistungsfaktor unter Berücksichtigung der Eingangsspannung Uin und des Netzstroms lin berechnet wird, zeigt die Figur 3 ein nicht optimiertes Verhalten des Netzteils 1.

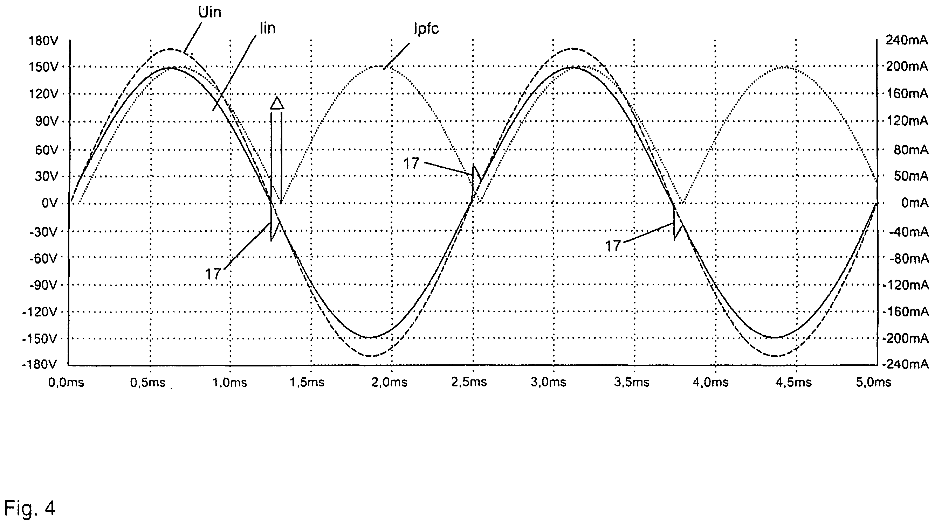

In der Figur 4 dagegen ist eine Phasenverschiebung Δ zwischen Eingangsspannung Uin und Eingangsstrom Ipfc durch die Phasenschiebereirichtung 16 eingebracht, so dass nun Netzstrom lin und Eingangsspannung Uin gleichphasig verlaufen und einen hohen Leistungsfaktor umsetzen.

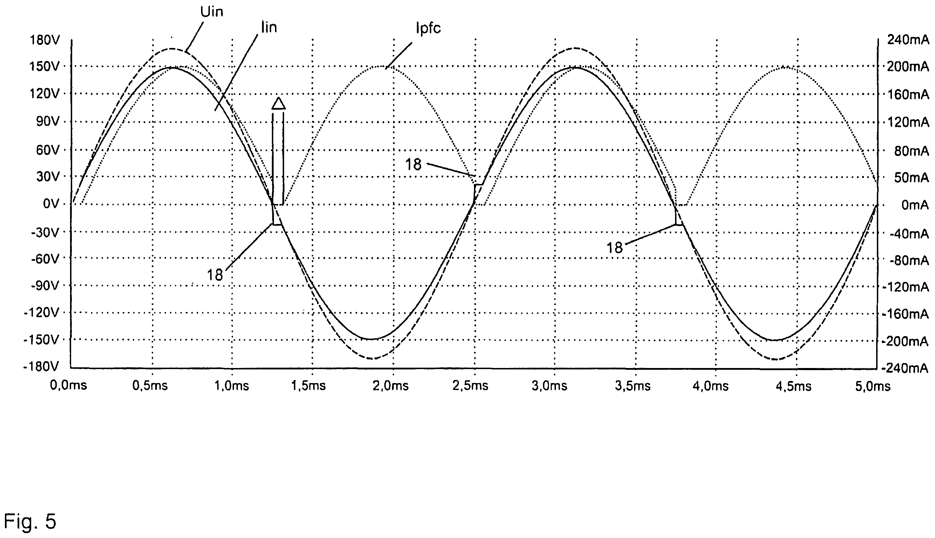

Allerdings entstehen aufgrund des Gleichrichters 5 Zacken 17 in dem Kurvenverlauf des Netzstroms lin. Nachdem die Zacken 17 betragsmäßig relativ klein sind, reduzieren diese den Leistungsfaktor kaum. Jedoch wird die Kurvenform des Netzstroms lin gestört, was ebenfalls unerwünscht ist. Aus diesem Grund setzt das Steuerungsmodul 10 eine Nullpunkt-Nullung um, wie diese in der Figur 5 gezeigt ist.

Das Stromformsignal 9 wird für die Zeitdauer der Phasenverschiebung Δ jeweils nach dem Durchgang des Eingangsspannungssignals durch Null für die Zeit der Phasenverschiebung Δ auf Null gesetzt, so dass auch der Eingangsstrom Ipfc auf Null gesetzt ist. Die Wirkung dieser Nullpunkt-Nullung ist wieder in dem Netzstrom lin zu erkennen. Statt der Zacken 17 sind nun deutlich kleinere Absätze 18 zu erkennen, die die Qualität des Kurvenverlaufs weniger einschränken.

### Bezugszeichenliste

- 1: Netzteil
- 2: Eingang
- 3: Ausgang
- 4: HF-Filter
- 5: Gleichrichter
- 6: PFC-Modul
- 7: Leistungsfaktorkorrektureinrichtung
- 8: Glättungseinrichtung
- 9: Stromformsignal
- 10: Steuerungsmodul
- 11: leer
- 12: Signalgenerator
- 13: Stromformmusterhalbwelle
- 14: Synchronisationseingang
- 15: Kontrolleinrichtung
- 16: Phasenschiebeeinrichtung
- 17: Zacken
- 18: Absätze

## Patentansprüche

1. Elektrische Versorgungsvorrichtung (1)
mit einem Eingang (2) zum Anschluss der elektrischen Versorgungsvorrichtung an eine Netzversorgung, die eine Wechselspannung als Eingangsspannung (Uin) zur Verfügung stellt,
mit einem Ausgang (3) zum Anschluss der elektrischen Versorgungsvorrichtung (1) an einen Verbraucher, wobei der Ausgang eine Gleichspannung (Uout) als Ausgangsspannung zur Verfügung stellt,
mit einem Gleichrichter (5), welcher die Eingangsspannung (Uin) in eine gleichgerichtete Eingangsspannung (Upfc) gleichrichtet,
mit einem PFC-Modul (6), welches eine Glättungseinrichtung (8) zur Glättung der gleichgerichteten Eingangsspannung (Upfc) und eine aktive Leistungsfaktorkorrektureinrichtung (7) umfasst, wobei die Leistungsfaktorkorrektureinrichtung (7) ausgebildet ist, in Abhängigkeit von einem zeitabhängigen Stromformsignal (9) einen zeitabhängigen Versorgungsstrom für die Glättungseinrichtung (8) derart zu formen, dass der zeitabhängige Eingangsstrom (Ipfc) in das PFC-Modul (6) an das Stromformsignal (9) angeglichen ist,
mit einem Steuerungsmodul (10), welches das Stromformsignal (9) für das PFC-Modul (6), insbesondere für die Leistungskorrektureinrichtung (7), erzeugt,
wobei
das Steuerungsmodul (10) die Kurvenform des Stromformsignals (9) im Betrieb der elektrischen Versorgungsvorrichtung (1) unabhängig von der Eingangsspannung (Uin) generiert und das Stromformsignal (9) mit der Eingangsspannung (Uin) oder einer Ableitung der Eingangsspannung, insbesondere der gerichteten Eingangsspannung (Upfc) zeitlich synchronisiert,
und eine Phasenschiebereinrichtung (16), welche eine Phasenverschiebung des Stromformsignals (9) ermöglicht, **dadurch gekennzeichnet, dass** die Phasenverschiebung so eingestellt ist, dass Blindströme in der elektrischen Versorgungsvorrichtung hervorgerufen durch Blindstromerzeuger korrigiert oder kompensiert werden und
wobei die Stromformmusterhalbwelle (13) in mindestens einem Randbereich für die Zeitdauer, die der Phasenverschiebung entspricht, auf 0 gesetzt wird, so dass bei einer, insbesondere induktiven Phasenverschiebung, die Stromformmusterhalbwelle (13) in dem Randbereich auf 0 gesetzt wird, so dass für den Zeitraum zwischen dem Nulldurchgang der Eingangsspannung (Uin) und dem Nulldurchgang des unveränderten Stromformsignals (9) der Eingangsstrom (Ipfc) auf Null gesetzt ist.

2. Elektrische Versorgungsvorrichtung (1) nach Anspruch 1, **dadurch gekennzeichnet, dass** das Stromformsignal (9) in Halbwellen unterteilt ist, wobei das Stromformsignal (9) jeder Halbwelle durch eine Stromformmusterhalbwelle (13) und einen Streckungsfaktor gebildet ist.

3. Elektrische Versorgungsvorrichtung (1) nach Anspruch 2, **dadurch gekennzeichnet, dass** die Stromformmusterhalbwelle (13) für jede Halbwelle gleich oder zumindest für mehr als 70%, vorzugsweise mehr als 80% des zeitlichen Verlaufs gleich ausgebildet ist.

4. Elektrische Versorgungsvorrichtung (1) nach Anspruch 2 oder 3, **dadurch gekennzeichnet, dass** die Stromformmusterhalbwelle (13) in dem Steuermodul (10) als Datensatz abgelegt ist oder als Funktion vorliegt.

5. Elektrische Versorgungsvorrichtung (1) nach einem der Ansprüche 2 bis 4, **dadurch gekennzeichnet, dass** das Steuerungsmodul (10) eine Kontrolleinrichtung (15) aufweist, die in Abhängigkeit der Differenz der Ausgangsspannung (Uout) und einer Referenzspannung (Uref) einen Differenzparameter bereitstellt, wobei der Streckungsfaktor in Abhängigkeit des Differenzparameters gebildet ist.

6. Elektrische Versorgungsvorrichtung (1) nach Anspruch 5, **dadurch gekennzeichnet, dass** der Streckungsfaktor über eine Halbwelle konstant gehalten ist.

7. Elektrische Versorgungsvorrichtung (1) nach einem der vorangehenden Ansprüche, **dadurch gekennzeichnet, dass** Blindströme aus einem vorgeschalteten HF-Filter (4) mit kapazitiver Wirkung korrigiert oder kompensiert werden.

8. Elektrische Versorgungsvorrichtung (1) nach einem der vorangehenden Ansprüche, **dadurch gekennzeichnet, dass** die Phasenverschiebung im Betrieb als konstanter oder quasi-konstanter Parameter ausgestaltet ist.

9. Elektrische Versorgungsvorrichtung (1) nach einem der vorangehenden Ansprüche, **dadurch gekennzeichnet, dass** die Phasenverschiebung als variabler, insbesondere lastabhängiger Parameter ausgestaltet ist.

10. Verfahren zum Betrieb der elektrischen Versorgungsvorrichtung (1) nach einem der vorhergehenden Ansprüche.

11. Verfahren nach Anspruch 10, **dadurch gekennzeichnet, dass** die elektrische Versorgungsvorrichtung (1) durch Änderung der Strommusterhalbwelle (13) umkonfiguriert wird.

## Claims

1. Electrical supply apparatus (1)
comprising an input (2) for connecting the electrical supply apparatus to a power supply system which provides an AC voltage as input voltage (Uin),
comprising an output (3) for connecting the electrical supply apparatus (1) to a load, wherein the output provides a DC voltage (Uout) as output voltage,
comprising a rectifier (5), which rectifies the input voltage (Uin) into a rectified input voltage (Upfc),
comprising a PFC module (6), which comprises a smoothing device (8) for smoothing the rectified input voltage (Upfc) and an active power factor correction device (7), wherein the power factor correction device (7) is designed to shape, in a manner depending on a time-dependent current waveform signal (9), a time-dependent supply current for the smoothing device (8) in such a way that the time-dependent input current (Ipfc) into the PFC module (6) is matched to the current waveform signal (9),
comprising a control module (10), which generates the current waveform signal (9) for the PFC module (6), in particular for the power correction device (7),
wherein
the control module (10) generates the curve shape of the current waveform signal (9) during the operation of the electrical supply apparatus (1) independently of the input voltage (Uin) and temporally synchronizes the current waveform signal (9) with the input voltage (Uin) or a derivative of the input voltage, in particular the directional input voltage (Upfc), and a phase shifter device (16), which enables a phase shift of the current waveform signal (9), **characterized in that** the phase shift is set so as to correct or compensate for reactive currents in the electrical supply apparatus caused by reactive current generators and wherein the current waveform pattern half-cycle (13) is set to 0 in at least one marginal region for the time duration which corresponds to the phase shift, such that in the case of a, more particularly inductive, phase shift, the current waveform pattern half-cycle (13) is set to 0 in the marginal region, such that the input current (Ipfc) is set to zero for the time period between the zero crossing of the input voltage (Uin) and the zero crossing of the unchanged current waveform signal (9).

2. Electrical supply apparatus (1) according to Claim 1, **characterized in that** the current waveform signal (9) is subdivided into half-cycles, wherein the current waveform signal (9) of each half-cycle is formed by a current waveform pattern half-cycle (13) and a stretch factor.

3. Electrical supply apparatus (1) according to Claim 2, **characterized in that** the current waveform pattern half-cycle (13), for each half-cycle, is designed to be identical or identical at least for more than 70%, preferably more than 80%, of the temporal profile.

4. Electrical supply apparatus (1) according to Claim 2 or 3, **characterized in that** the current waveform pattern half-cycle (13) is stored as a data set or is present as a function in the control module (10).

5. Electrical supply apparatus (1) according to any of Claims 2 to 4, **characterized in that** the control module (10) has a supervisory device (15), which provides a difference parameter in a manner depending on the difference between the output voltage (Uout) and a reference voltage (Uref), wherein the stretch factor is formed in a manner depending on the difference parameter.

6. Electrical supply apparatus (1) according to Claim 5, **characterized in that** the stretch factor is kept constant over a half-cycle.

7. Electrical supply apparatus (1) according to any of the preceding claims, **characterized in that** reactive currents from an RF filter (4) connected upstream and having a capacitive effect are corrected or compensated for.

8. Electrical supply apparatus (1) according to any of the preceding claims, **characterized in that** the phase shift is configured as a constant or quasi-constant parameter during operation.

9. Electrical supply apparatus (1) according to any of the preceding claims, **characterized in that** the phase shift is configured as a variable, in particular load-dependent, parameter.

10. Method for operating the electrical supply apparatus (1) according to any of the preceding claims.

11. Method according to Claim 10, **characterized in that** the electrical supply apparatus (1) is reconfigured by the current pattern half-cycle (13) being changed.

## Revendications

1. Dispositif d'alimentation électrique (1) comportant
une entrée (2) destinée à connecter le dispositif d'alimentation électrique à un réseau d'alimentation qui fournit une tension alternative en tant que tension d'entrée (Uin),
une sortie (3) destinée à connecter le dispositif d'alimentation électrique (1) à une charge, dans lequel la sortie fournit une tension continue (Uₒᵤₜ) en tant que tension de sortie,
un redresseur (5) qui redresse une tension d'entrée (Uin) en une tension d'entrée redressée (Upfc),
un module PFC (6) qui comprend un dispositif de lissage (8) destiné à lisser la tension d'entrée redressée (Upfc) et un dispositif de correction de facteur de puissance (7), dans lequel le dispositif de correction de facteur de puissance (7) est conçu pour mettre en forme un courant d'alimentation dépendant du temps en fonction d'un signal de forme de courant (9) dépendant du temps pour le dispositif de lissage (8) de manière à ce que le courant d'entrée dépendant du temps (Ipfc) soit amené à tendre vers le signal de forme de courant (9) dans le module PFC (6),
un module de commande (10) qui génère le signal de forme de courant (9) destiné au module PFC (6), notamment destiné au dispositif de correction de puissance (7),
dans lequel le module de commande (10) génère la forme de la courbe du signal de forme de courant (9) lors du fonctionnement du dispositif d'alimentation électrique (1) indépendamment de la tension d'entrée (Uin) et synchronise temporellement le signal de forme de courant (9) avec la tension d'entrée (Uin) ou avec un dérivé de la tension d'entrée, notamment la tension d'entrée redressée (Upfc),
et un dispositif de déphasage (16) qui permet de déphaser le signal de forme de courant (9), **caractérisé en ce que** le déphasage est réglé de manière à corriger ou compenser des courants réactifs provoqués dans le dispositif d'alimentation électrique par des générateurs de courant réactif, et
dans lequel la demi-onde de modèle de forme de courant (13) est mise à 0 dans au moins un domaine périphérique pendant l'intervalle de temps qui correspond au déphasage, de manière à ce que, lors d'un déphasage, notamment par induction, la demi-onde de modèle de forme de courant (13) soit mise à zéro dans le domaine périphérique de telle sorte que, pendant l'intervalle de temps compris entre le passage à zéro de la tension d'entrée (Uin) et le passage à zéro du signal de forme de courant (9) non modifié, le courant d'entrée (Ipfc) soit mis à zéro.

2. Dispositif d'alimentation électrique (1) selon la revendication 1, **caractérisé en ce que** le signal de forme de courant (9) est divisé en demi-ondes, dans lequel le signal de forme de courant (9) de chaque demi-onde est formé par une demi-onde de modèle de forme de courant (13) et un facteur d'extension.

3. Dispositif d'alimentation électrique (1) selon la revendication 2, **caractérisé en ce que** la demi-onde de modèle de forme de courant (13) est conçue de manière à ce que, pour chaque demi-onde, elle soit réalisée de manière à être égale ou au moins supérieure à 70 %, et de préférence supérieure à 80 %, de la courbe temporelle.

4. Dispositif d'alimentation électrique (1) selon la revendication 2 ou 3, **caractérisé en ce que** la demi-onde de modèle de forme de courant (13) est stockée dans le module de commande (10) sous la forme d'un enregistrement de données ou est présente en tant que fonction.

5. Dispositif d'alimentation électrique (1) selon l'une quelconque des revendications 2 à 4, **caractérisé en ce que** le module de commande (10) comporte un dispositif de contrôle (15) qui fournit, en fonction de la différence entre la tension de sortie (Uout) et une tension de référence (Uref), un paramètre de différence, dans lequel le facteur d'extension est établi en fonction du paramètre de différence.

6. Dispositif d'alimentation électrique (1) selon la revendication 5, **caractérisé en ce que** le facteur d'extension est maintenu constant au cours d'une demi-onde.

7. Dispositif d'alimentation électrique (1) selon l'une quelconque des revendications précédentes, **caractérisé en ce que** les courants réactifs provenant d'un filtre HF (4) connecté en amont sont corrigés ou compensés par effet capacitif.

8. Dispositif d'alimentation électrique (1) selon l'une quelconque des revendications précédentes, **caractérisé en ce que**, lors du fonctionnement, le déphasage est réalisé sous la forme d'un paramètre constant ou quasi-constant.

9. Dispositif d'alimentation électrique (1) selon l'une quelconque des revendications précédentes, **caractérisé en ce que** le déphasage est réalisé sous la forme d'un paramètre variable, notamment dépendant de la charge.

10. Procédé de mise en fonctionnement d'un dispositif d'alimentation électrique (1) selon l'une quelconque des revendications précédentes.

11. Procédé selon la revendication 10, **caractérisé en ce que** le dispositif d'alimentation électrique (1) est reconfiguré par modification de la demi-onde de configuration de courant (13).
